Europäisches Patentamt

European Patent Office

Office européen des brevets

(19)

(11) Numéro de publication : **0 179 962**
**B1**

(12) **FASCICULE DE BREVET EUROPÉEN**

(45) Date de publication du fascicule du brevet :
30.09.87

(51) Int. Cl.⁴ : **B 62 D 33/02**, B 65 D 88/12,
B 62 D 29/00

(21) Numéro de dépôt : **84440075.4**

(22) Date de dépôt : **27.12.84**

(54) **Profilé d'assemblage.**

(30) Priorité : **30.10.84 FR 8416964**

(43) Date de publication de la demande :
**07.05.86 Bulletin 86/19**

(45) Mention de la délivrance du brevet :
**30.09.87 Bulletin 87/40**

(84) Etats contractants désignés :
**AT BE CH DE GB IT LI LU NL SE**

(56) Documents cités :
**GB-A-  887 117**
**US-A- 4 212 405**
**US-A- 4 437 699**

(73) Titulaire : **BENALU S.A.**
**108 rue Pierre Brossolette**
**F-62110 Henin-Beaumont (Pas-de-Calais) (FR)**

(72) Inventeur : **Afchain, Jean**
**23 rue Antoine Mercier**
**F-59450 Somain (Nord) (FR)**

(74) Mandataire : **Lepage, Jean-Pierre**
**Cabinet Lepage & Aubertin Innovations et Prestations**
**23/25, rue Nicolas Leblanc B.P. 1069**
**F-59011 Lille Cédex 1 (Nord) (FR)**

## Description

L'invention est relative à un conteneur ou benne pour camion, notamment destiné au conditionnement, stockage, et transport de produits pulvérulents en vrac. Elle trouvera notamment son application dans le domaine de la construction métallique.

Généralement, pour transporter des produits pulvérulents en vrac, on utilise des réceptacles de grandes dimensions qui peuvent être transportés par voie routière, aérienne ou navigable. On connaît des camions-bennes dont la benne est prévue pour recevoir ces produits qui comportent un dispositif d'inclinaison de ladite benne favorisant le déchargement du produit.

On connaît également des réceptacles de grandes dimensions appelés « conteneurs », ces dispositifs sont plus autonomes et permettent leur transport par camion, par train, par bateau, ou par avion. Ils sont néanmoins conçus de manière à faciliter leur vidage par l'inclinaison du conteneur.

On connaît des bennes de camions réalisées en tôles d'acier pliées en U de grandes dimensions comportant des profils de rives et une ceinture pour rigidifier la benne. Les deux côtés latéraux sont fermés par deux parois, la paroi arrière étant généralement amovible et basculante pour pouvoir décharger les produits contenus par inclinaison de la benne.

Le principal inconvénient de ce type de bennes réside dans le fait qu'elles nécessitent pour leur fabrication des machines importantes, notamment pour plier les tôles, et des opérations d'assemblage et de soudure délicates, principalement dans l'angle inférieur de la benne.

De plus, cette solution ne conduit pas à une utilisation rationnelle de la matière d'où des surdimensionnements qui accroissent les coûts de production.

Les conteneurs destinés à transporter des produits pulvérulents en vrac ont une forme parallélépipédique de dimensions normalisées et munie à chaque angle de pièces de coins creuses normalisées pour faciliter la préhension et la manutention des conteneurs. Ces conteneurs présentent généralement une face supérieure amovible ou des orifices pour faciliter le remplissage et une face arrière dotée d'ouvertures amovibles pour faciliter le vidage du conteneur en inclinant ce dernier.

Le respect des dimensions normalisées de ces conteneurs oblige une construction et un assemblage soignés pour respecter les normes. De plus, l'association des différentes parois provoque la présence d'arêtes anguleuses de chaque côté longitudinal du fond, ce qui a pour inconvénient lors du bennage du conteneur de retenir une certaine partie des produits stockés à l'intérieur de la benne.

Le but de la présente invention est de proposer un conteneur ou benne pour camion formé de parois latérales concourantes, dont l'assemblage est facilité grâce à un ou plusieurs profilés d'assemblage prévus selon la présente invention.

Un des buts de la présente invention est de proposer un profilé d'assemblage permettant de positionner facilement les différentes pièces constituantes entre elles afin de respecter les normes de construction.

Un autre but de la présente invention est de proposer un profilé d'assemblage qui permet de disposer, entre les parois longitudinales et le fond, deux coins intérieurs arrondis facilitant le bennage des produits contenus en évitant l'accrochage dudit produit dans ces coins.

Un autre but de la présente invention est de proposer un profilé d'assemblage qui permet de réaliser une construction mécano-soudée présentant une résistance mécanique élevée, notamment à la torsion, puis se trouve reconstitué par l'assemblage des différents éléments une section tubulaire favorable à une bonne résistance à la torsion.

D'autres buts et avantages de la présente invention apparaîtront au cours de la description qui va suivre, qui n'est donnée qu'à titre indicatif et qui n'a pas pour but de la limiter.

Selon la présente invention, le conteneur ou benne pour camion, notamment destiné au conditionnement, stockage, et transport des produits pulvérulents en vrac, ledit conteneur ou benne étant constitué de parois latérales concourantes, telles que les parois longitudinales et les plaques de fond, définissant entre elles le volume de stockage, lesdites parois étant renforcées par des traverses, fixées sur les parois latérales, telles que des traverses-raidisseurs des parois longitudinales et/ou des traverses-renfort des plaques de fond (voir US-A-4 437 699), est caractérisé par le fait qu'il comprend un ou plusieurs profilés d'assemblage, disposés au niveau des arêtes de concours de deux parois latérales adjacentes, présentant une âme, dont l'axe longitudinal correspond à ladite arête de concours, autour de laquelle sont réparties au moins :

une première aile, dont le plan est sensiblement parallèle à celui de la première paroi latérale, sur laquelle se fixe cette dernière,

une deuxième aile, solidaire de ladite première aile, dont le plan est sensiblement parallèle à celui de la deuxième paroi latérale, sur laquelle se fixe cette dernière,

une troisième aile, solidaire de ladite première aile, dont le plan est disposé transversalement par rapport à ladite première aile,

lesdites première et seconde ailes présentant des moyens de positionnement des tôles constituant les parois latérales concourantes aptes à positionner les bords respectifs des tôles par rapport à l'arête de concours,

lesdites première et troisième ailes constituant substantiellement des moyens de positionnement des traverses aptes à positionner les extrémités des traverses-raidisseurs et des traverses de renfort.

L'invention sera mieux comprise si l'on se réfère à la description ci-dessous ainsi qu'aux dessins en annexe qui en font partie intégrante.

La figure 1 représente une vue en coupe d'un assemblage réalisé avec le profilé de la présente invention pour constituer une benne.

La figure 2 représente une vue en coupe d'un profilé réalisé suivant un mode préférentiel de l'invention.

La figure 3 représente une vue en coupe d'un profilé réalisé selon un autre mode de la présente invention.

Pour réaliser des bennes de camions ou des conteneurs pour transporter des produits pulvérulents en vrac, on a été amené à utiliser des matériaux plus légers et plus facilement façonnables que l'acier tels que notamment l'aluminium. De plus, pour éviter de façonner et de plier les tôles en forme pour constituer le corps de la benne, on préfère utiliser une construction du type « mécano-soudée ».

Pour pouvoir effectuer de telles constructions en respectant des côtes d'encombrements précises, souvent définies par des normes, il est indispensable de prendre des dispositions pour faciliter l'assemblage, rendre plus simple la fabrication et de ce fait, diminuer les temps de main-d'œuvre et les coûts de revient.

Pour réaliser le corps d'une benne de camion ou d'un conteneur destiné au transport de produits pulvérulents en vrac, il est nécessaire d'élaborer un assemblage de tôles de diverses épaisseurs ayant un profil en forme de U, les tôles étant ensuite raidies ou renforcées au moyen de traverses. Le profilé d'assemblage selon la présente invention permet notamment de simplifier la réalisation de cet assemblage.

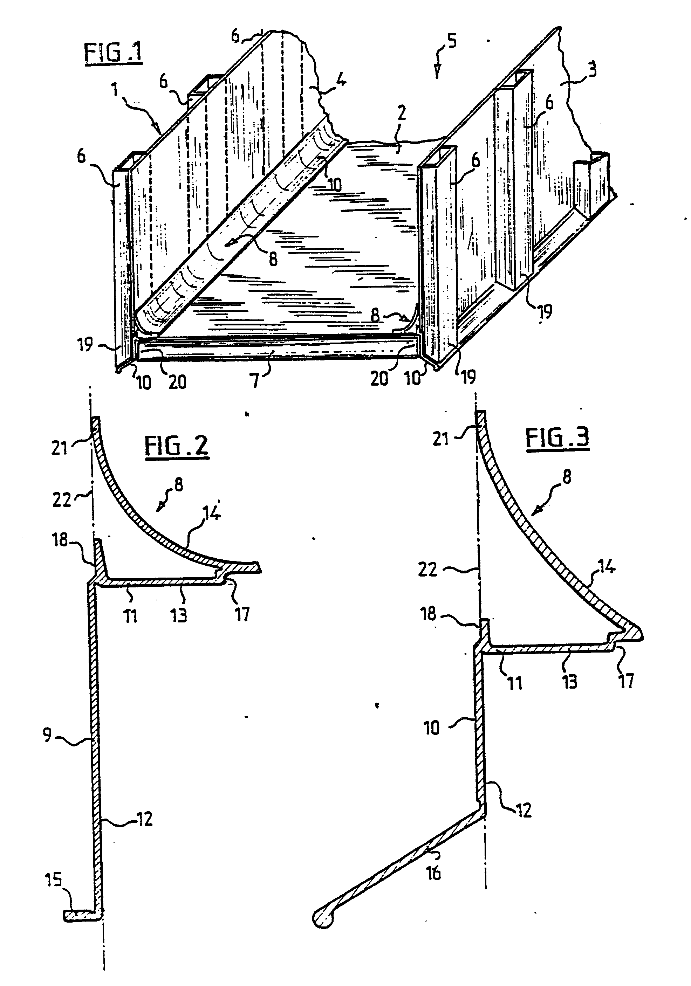

La figure 1 représente une vue du corps 1 d'une benne ou d'un conteneur destiné au transport de produits pulvérulents en vrac. Les tôles de fond 2 et les tôles de parois longitudinales 3 et 4 sont disposées en forme de U, de ce fait, elles définissent un volume intérieur 5 permettant de contenir lesdits produits pulvérulents.

Pour augmenter la rigidité du corps de la benne 1, on dispose le long des parois longitudinales 3 et 4 des traverses-raidisseurs 6 et des traverses-renfort 7 sous les plaques de fond 2.

Selon la présente invention, le profilé d'assemblage 8 présente :

des moyens de positionnement des tôles constituant les parois longitudinales 3 et 4 et le fond 2,

des moyens de positionnement des traverses-raidisseurs 6 des parois longitudinales 3 et 4,

des moyens de positionnement des traverses-renfort 7 des plaques de fond 2.

Le profilé d'assemblage 8, de la présente invention, est placé à chaque angle formé par les parois longitudinales 3 et 4 et le fond 2. Il présente en outre des moyens de liaison entre deux parois adjacentes, 4 et 2, ou 2 et 3, afin de faciliter l'écoulement du produit contenu lors du bennage.

Pour effectuer de tels conteneurs ou bennes 1 en respectant des côtées et des dimensions bien précises, on utilise des tôles notamment d'aluminium extrudées présentant des tolérances très faibles qui combinées avec les différents moyens de positionnement disposés sur le profilé d'assemblage 8, permettent une fabrication précise.

Selon la présente invention, les moyens de positionnement des tôles constituant les parois longitudinales 3 et 4 et le fond 2, les moyens de positionnement des traverses-raidisseurs 6, les moyens de positionnement des traverses de renfort 7 et les moyens de liaison entre les parois adjacentes, sont disposés sur un profil ouvert 9 ou 10 tel que respectivement représenté aux figures 2 et 3.

Dans le mode de réalisation représenté à la figure 2, le profilé ouvert 9 est essentiellement constitué d'une âme 11 en forme de cornière, comportant une aile verticale 12 et une aile horizontale 13, d'une aile supérieure courbe 14, et d'une aile inférieure horizontale 15. Ce type de profilé est plus particulièrement destiné à la réalisation de conteneurs, l'aile inférieure horizontale 15 constituant le plan de pose dudit conteneur.

Le profilé ouvert 10 représenté à la figure 3 est plus particulièrement destiné à la réalisation de bennes de camions. Il est constitué de manière similaire au profilé 9 de la figure 2 mais l'aile inférieure 16 est oblique au lieu d'être horizontale.

L'âme 11 du profilé 9 ou 10 présente deux décrochements 17 et 18, un horizontal 17 et un vertical 18, qui sont placés respectivement dans le prolongement de l'aile verticale 12 et de l'aile horizontale 13 de ladite âme 11.

Ces décrochements constituent avantageusement lesdits moyens de positionnement des tôles constituant les parois longitudinales 3 et 4 et le fond 2 et sont aptes à positionner les bords des tôles constituant lesdites parois. De ce fait, on peut facilement respecter les dimensions souhaitées.

A la partie inférieure de l'aile verticale 12 de l'âme 11, est solidaire une aile inférieure horizontale 15 ou oblique 16 dirigée vers l'extérieur du profilé. Cette aile inférieure 15 ou 16 constitue avec l'aile verticale 12 de l'âme 11 du profilé, respectivement, les moyens de positionnement des traverses-raidisseurs 6 des parois longitudinales 3 et 4 et les moyens de positionnement des traverses de renfort 7 du fond 2.

En effet, comme le montre la figure 1, les extrémités 19 des traverses-raidisseurs 6 et les extrémités 20 des traverses-renfort 7 sont positionnées sur les profilés d'assemblage 8 placés à chaque angle inférieur de la benne ou du conteneur ; l'aile inférieure 15 ou 16 positionne les traverses-raidisseurs 6 et l'aile verticale 12 positionne de chaque côté les extrémités 20 des traverses-renfort 7.

Le profilé d'assemblage 8 comporte en outre des moyens de liaison, facilitant l'écoulement du produit contenu, de forme incurvée pour arrondir l'angle inférieur formé par les parois adjacentes 4 et 2 ou 2 et 3.

Ces moyens sont notamment constitués par une aile supérieure courbe 14 telle que représentée aux figures 2 et 3.

Cette aile courbe 14 est solidaire de l'extrémité de l'aile supérieure 13 de l'âme 11 du profilé. L'autre extrémité 21 est libre et est avantageusement placée dans le plan 22 défini par l'aile verticale 12 de l'âme 11 du profilé.

Grâce à cette disposition, lorsque l'assemblage des tôles constituant les parois 3 et 4 et constituant le fond 2 est terminé, la continuité entre les différentes tôles est assurée par cette aile courbe 14 qui, de ce fait, arrondit l'angle formé par les tôles adjacentes.

Dans un mode de réalisation préférentiel, cette aile 14 a un profilé courbe dont le rayon de courbure est avantageusement compris entre 40 et 400 mm, la partie extrême 21 comportant de préférence un méplat autorisant un bon contact entre les tôles constituant les parois 2, 3, 4 et le profilé 8.

Pour constituer un assemblage, on dispose respectivement autour du profilé 8, les tôles constituant les parois 2, 3 et 4, les traverses-raidisseurs 6 et les traverses de renfort 7, ces différents éléments étant ensuite soudés sur ledit profilé 8. Lors de cet assemblage, le profilé ouvert 9 ou 10 est fermé par les tôles constituant les parois longitudinales 3 ou 4 ou le fond 2, ceci en vue d'améliorer la rigidité de l'ensemble.

Les profilés d'assemblage 8 dans leurs différentes formes 9 ou 10 tels que représentés aux figures 2 et 3 sont avantageusement réalisés en aluminium et sont notamment obtenus par extrudage.

Grâce au profilé d'assemblage qui vient d'être décrit, on peut donc réaliser des ossatures de bennes ou de conteneurs présentant d'excellentes caractéristiques mécaniques, obtenues par une fabrication simplifiée qui permet en outre également de faire varier les épaisseurs de tôles ainsi que les caractéristiques des raidisseurs et renfort. De plus, le conteneur ou la benne pour transport de produits pulvérulents comporte une section en U dont les angles inférieurs sont arrondis facilitant ainsi le bennage des produits contenus.

Les modes de réalisation qui viennent d'être décrits ne sont donnés qu'à titre indicatif, et d'autres mises en œuvre de la présente invention, à la portée de l'Homme de l'Art, pourraient être adoptées sans pour autant sortir du cadre de celle-ci. En particulier, on pourrait envisager de réaliser un conduit en forme de tube de section polygonale comportant à chaque arête un profilé réalisé selon la présente invention.

## Revendications

1. Conteneur ou benne pour camion, notamment destiné au conditionnement, stockage, et transport des produits pulvérulents en vrac, ledit conteneur ou benne (1) étant constitué de parois latérales concourantes, telles que les parois longitudinales (3, 4) et les plaques de fond (2), définissant entre elles le volume de stockage, lesdites parois (2 à 4) étant renforcées par des traverses, fixées sur les parois latérales, telles que des traverses-raidisseurs (6) des parois longitudinales (3, 4) et/ou des traverses-renfort (7) des plaques de fond (2), caractérisé par le fait qu'il comprend un ou plusieurs profilés (9 ; 10) d'assemblage, disposés au niveau des arêtes de concours de deux parois latérales (2, 3, 4) adjacentes, présentant une âme (11), dont l'axe longitudinal correspond à ladite arête de concours, autour de laquelle sont réparties au moins :

une première aile (12), dont le plan est sensiblement parallèle à celui de la première paroi latérale, sur laquelle se fixe cette dernière,

une deuxième aile (13), solidaire de ladite première aile (12), dont le plan est sensiblement parallèle à celui de la deuxième paroi latérale, sur laquelle se fixe cette dernière,

une troisième aile (15 ; 16), solidaire de ladite première aile, dont le plan est disposé transversalement par rapport à ladite première aile (12),

lesdites première (12) et seconde (13) ailes présentant des moyens (17, 18) de positionnement des tôles constituant les parois latérales concourantes (2, 3, 4) aptes à positionner les bords respectifs des tôles par rapport à l'arête de concours,

lesdites première (12) et troisième (15 ; 16) ailes constituant substantiellement des moyens de positionnement des traverses (6, 7) aptes à positionner les extrémités des traverses-raidisseurs (6) et des traverses de renfort (7).

2. conteneur ou benne selon la revendication 1, caractérisé par le fait que ledit profilé d'assemblage (9 ; 10) présente des moyens de liaison entre deux parois adjacentes, facilitant l'écoulement du produit contenu, substantiellement formés par une quatrième aile (14), solidaire de ladite deuxième aile (13), orientée selon un angle aigu par rapport à cette dernière (13), afin de rejoindre le plan défini par ladite première aile (12).

3. Conteneur ou benne selon la revendication 2, caractérisé par le fait que ladite quatrième aile (14) présente une forme incurvée pour arrondir l'angle intérieur formé par les parois adjacentes (4, 2) ou (2, 3).

4. Conteneur ou benne selon la revendication 2, caractérisé par le fait que lesdites ailes (12 à 15 ; 12 à 14 et 16) forment un profil ouvert (9 ; 10) qui est ensuite fermé par les tôles constituant les parois longitudinales (3 et 4) ou le fond (2), en vue d'améliorer la rigidité.

5. Conteneur ou benne selon la revendication 4, caractérisé par le fait que le profil ouvert (9) est constitué d'une âme (11) en forme de cornière, comportant une première aile (12) verticale et une deuxième aile (13) horizontale, d'une troisième aile (15) inférieure horizontale et d'une quatrième aile (14) supérieure courbe.

6. Conteneur ou benne selon la revendication 4, caractérisé par le fait que le profilé ouvert (10) est constitué d'une âme (11) en forme de cornière, comportant une première aile (12) verticale et une deuxième aile (13) horizontale, d'une troisième aile (16) inférieure oblique et d'une quatrième aile (14).

7. Conteneur ou benne selon la revendication 1, caractérisé par le fait que l'âme (11) du profilé (9 ; 10) présente deux décrochements (17, 18), un horizontal (17) et un vertical (18), placés respectivement dans le prolongement de la deuxième aile (13) et de la première aile (12) de ladite âme, aptes à positionner les bords des tôles constituant les parois (2 à 4).

8. Conteneur ou benne selon la revendication 1, caractérisé par le fait que les tôles de parois longitudinales (3 ou 4), les tôles de fond (2), les traverses de renfort (7), les traverses-raidisseurs (6), sont soudées sur ledit profilé (9 ; 10).

9. Conteneur ou benne selon la revendication 1, caractérisé par le fait que le profilé est réalisé en aluminium.

10. Conteneur ou benne selon la revendication 1, caractérisé par le fait que ledit profilé est extrudé.

## Claims

1. A container or large bucket for lorry, being particularly intended for the conditioning, storage and transport of powdered products in bulk, said container or large bucket (1) comprising concurrent lateral walls, such as the longitudinal walls (3, 4) and the bottom plates (2) defining between them the storage volume, said walls (2 to 4) being reinforced with cross-bars fastened to the lateral walls, such as the stiffening cross-bars (6) of the longitudinal walls (3, 4) and/or the reinforcement cross-bars (7) of the bottom plates (2), characterized in that it comprises one or several assembling sections (9 ; 10) disposed on the level with the edges of concurrence of two adjacent lateral walls (2, 3, 4), having a web (11) whose the longitudinal axis corresponds to said edge of concurrence, around which are distributed at least :
a first wing (12) whose the plan is appreciably parallel with this of the first lateral wall, on which is fastened the latter,
a second wing (13), integral with said first wing (12), whose the plan is appreciably parallel with this of the second lateral wall, on which is fastened the latter,
a third wing (15 ; 16), integral with said first wing, whose the plan is transversely disposed with respect to said first wing (12),
said first (12) and second (13) wings having means (17, 18) for positioning the sheet-metals constituting the concurrent lateral walls (2, 3, 4) suitable for positioning the respective edges of the sheet-metals with respect to the edge of concurrence,
said first (12) and third (15 ; 16) wings substantially constituting the means for positioning the cross-bars (6, 7) suitable for positioning the ends of the stiffening cross-bars (6) and the reinforcement cross-bars (7).

2. A container or large bucket according to claim 1, characterized in that said assembling section (9 ; 10) has means of joining between the adjacent walls, facilitating the flowing of the contained product, substantially composed of a fourth wing (14), integral with said second wing (13), directed according to an acute angle with respect to the latter (13), in order to join again the plan defined by said first wing (12).

3. A container or large bucket according to claim 2, characterized in that said fourth wing (14) has an incurvated shape in order to make round the inner angle formed by the adjacent walls (4, 2) or (2, 3).

4. A container or large bucket according to claim 2, characterized in that said wings (12 to 15 ; 12 to 14 and 16) form an open section (9 ; 10) which is then closed by the sheet-metals constituting the longitudinal walls (3 and 4) or the bottom (2) in order to have an improved rigidity.

5. A container or large bucket according to claim 4, characterized in that the open section (9) is composed of a web (11) in the shape of an angle-iron, comprising a first vertical wing (12) and a second horizontal wing (13), a third horizontal wing (15) and a fourth upper curved wing (14).

6. A container or large bucket according to claim 4, characterized in that the open section (10) is composed of a web (11) in the shape of an angle-iron comprising a first vertical wing (12) and a second horizontal wing (13), a third lower oblique wing (16) and a fourth wing (14).

7. A container or large bucket according to claim 1, characterized in that the web (11) of the section (9 ; 10) has two steps (17, 18), one horizontal (17) and one vertical (18), respectively disposed in prolongation of the second wing (13) and the first wing (12) of said web and suitable for positioning the edges of the sheet-metals constituting the walls (2 to 4).

8. A container or large bucket according to claim 1, characterized in that the sheet-metals of the longitudinal walls (3 or 4), the bottom sheet-metals (2), the reinforcement cross-bars (7), the stiffening cross-bars (6) are welded to said section (9 ; 10).

9. A container or large bucket according to claim 1, characterized in that the section is realized in aluminium.

10. A container or large bucket according to claim 1, characterized in that said section is extruded.

## Patentansprüche

1. Behälter oder Aufbau für Lastwagen, insbesondere bestimmt zum Konditionieren, Lagern und Transportieren von pulverförmigen Produkten in loser Form, wobei der besagte Behälter oder Aufbau (1) aus zusammenlaufenden seitlichen Wänden, wie den Längswänden (3, 4), und Bodenplatten (2) besteht, die das Fassungsvermögen bestimmen, und wobei die besagten Wände (2 bis 4) durch auf seitlichen Wänden befestigte Traversen, wie Versteifungstraversen (6) der Längswände (3, 4) und/oder Verstärkungstraversen (7) der Bodenplatten (2) verstärkt sind, dadurch gekennzeichnet, daß er ein oder mehrere Verbindungsprofile (9 ; 10) aufweist, die im Bereich der Verbindungskanten von zwei aneinandergrenzenden seitlichen Wänden (2, 3, 4) angeordnet sind und eine Seele (11) aufweisen, deren Längsachse der besagten, Verbindungskante entspricht, um die mindestens angeordnet sind :

ein erster Schenkel (12), dessen Ebene im wesentlichen parallel zu der Ebene der ersten seitlichen Wand ist, und auf dem diese letztere befestigt wird ;

ein zweiter Schenkel (13), der mit dem besagten ersten Schenkel (12) fest verbunden ist, und dessen Ebene im wesentlichen parallel zu der Ebene der zweiten seitlichen Wand ist, und auf dem diese letztere befestigt wird ;

ein dritter Schenkel (15 ; 16), der mit dem besagten ersten Schenkel fest verbunden ist, und dessen Ebene quer zu dem besagten ersten Schenkel (12) angeordnet ist ;

wobei der besagte erste Schenkel (12) und der besagte zweite Schenkel (13) Mittel (17, 18) zur Positionierung der Bleche der zusammenlaufenden seitlichen Wände (2, 3, 4) aufweisen, mit denen die Ränder der Bleche bezüglich Verbindungskante positioniert werden können ; und

wobei der besagte erste Schenkel (12) und der besagte dritte Schenkel (15 ; 16) im wesentlichen Mittel zur Positionierung der Traversen (6, 7) darstellen, mit denen die Enden der Versteifungstraversen (6) und der Verstärkungstraversen (7) positioniert werden können.

2. Behälter oder Aufbau gemäß Anspruch 1, dadurch gekennzeichnet, daß das besagte Verbindungsprofil (9 ; 10) Mittel zur Verbindung von zwei aneinandergrenzenden Wänden aufweist, die das Fließen des Ladegutes erleichtern, und die im wesentlichen aus einem vierten Schenkel (14) bestehen, der mit dem besagten zweiten Schenkel (13) fest verbunden ist und damit einen spitzen Winkel bildet, damit er wieder in die Ebene übergeht, die von dem besagten ersten Schenkel (12) definiert wird.

3. Behälter oder Aufbau gemäß Anspruch 2, dadurch gekennzeichnet, daß der besagte vierte Schenkel (14) eine gekrümmte Form aufweist, um die von den angrenzenden Wänden (4, 2) oder (2, 3) gebildete innere Ecke zu verrunden.

4. Behälter oder Aufbau gemäß Anspruch 2, dadurch gekennzeichnet, daß die besagten Schenkel (12 bis 15 ; 12 bis 14 und 16) ein offenes Profil (9 ; 10) bilden, das danach durch Bleche, die die Längswände (3 und 4) oder den Boden (2) bilden, verschlossen wird, um die Steifigkeit zu verbessern.

5. Behälter oder Aufbau gemäß Anspruch 4, dadurch gekennzeichnet, daß das offene Profil (9) aus einer Seele (11) in Form eines Winkelprofils mit einem ersten, vertikalen Schenkel (12) und einem zweiten, horizontalen Schenkel (13), einem dritten, unteren, horizontalen Schenkel (15), und einem vierten, oberen, gekrümmten Schenkel (14) besteht.

6. Behälter oder Aufbau gemäß Anspruch 4, dadurch gekennzeichnet, daß das offene Profil (10) aus einer Seele (11) in Form eines Winkelprofils mit einem ersten, vertikalen Schenkel (12) und einem zweiten, horizontalen Schenkel (13), sowie einem dritten, unteren, schrägen Schenkel (16), und einem vierten Schenkel (14) besteht.

7. Behälter oder Aufbau gemäß Anspruch 1, dadurch gekennzeichnet, daß die Seele (11) des Profils (9 ; 10) zwei Absätze (17, 18), und zwar einen horizontalen (17) und einen vertikalen (18) aufweist, die in der Verlängerung des zweiten Schenkels (13) bzw. des ersten Schenkels (12) der besagten Seele angeordnet sind, und mit denen die Ränder der Bleche, aus denen die Wände (2 bis 4) bestehen, positioniert werden können.

8. Behälter oder Aufbau gemäß Anspruch 1, dadurch gekennzeichnet, daß die Bleche der Längswände (3 oder 4), die Bodenbleche (2), die Verstärkungstraversen (7), und die Versteifungstraversen (6) auf das besagte Profil (9 ; 10) aufgschweißt sind.

9. Behälter oder Aufbau gemäß Anspruch 1, dadurch gekennzeichnet, daß das Profil aus Aluminium besteht.

10. Behälter oder Aufbau gemäß Anspruch 1, dadurch gekennzeichnet, daß das besagte Profil extrudiert ist.

FIG.1

FIG.2

FIG.3